# EUROPEAN PATENT SPECIFICATION

(11) **EP 1 764 642 B1**
(45) Date of publication and mention of the grant of the patent: **23.11.2016**
(21) Application number: 06019058.4
(22) Date of filing: 12.09.2006
(51) Int. Cl.: G02F 1/1333, G02F 1/29, F21V 14/00

(54) **Liquid crystal optical element, manufacturing method thereof, and vehicle light using the same**
Optisches Flüssigkristallelement, Verfahren zu dessen Herstellung und dieses verwendende Fahrzeugbeleuchtung
Elément optique à cristaux liquides, son procédé de fabrication et éclairage pour véhicule utlisant celui-ci

(30) Priority: 16.09.2005 JP 2005270535
(43) Date of publication of application: 21.03.2007
(73) Proprietor: Stanley Electric Co., Ltd., Meguro-ku Tokyo 153-8636 (JP)
(72) Inventor: Toko, Yasuo, Meguro-ku Tokyo 153-8636 (JP)
(74) Representative: Emde, Eric

(56) References cited:
- WO-A-02/057842
- JP-A- 7 296 605
- GHOSH ANUP ET AL: "Polarization-independent electrically tunable phase grating fabricated from ultraviolet-curable liquid crystals" JOURNAL OF APPLIED PHYSICS, AMERICAN INSTITUTE OF PHYSICS. NEW YORK, US, vol. 96, no. 10, 15 November 2004 (2004-11-15), pages 5909-5911, XP012068954 ISSN: 0021-8979

## Description

### BACKGROUND OF THE INVENTION

### 1. Technical Field of the Invention

The present invention relates to a liquid crystal optical element, to a manufacturing method thereof, and to a vehicle light using the same.

### 2. Description of the Related Art

In general, a vehicle light is configured to include a light source, a reflector, and a lens as main components. The distribution of projection light in this type of vehicle light can be controlled by the methods described hereinbelow, for example.

As the first control method, a projection pattern formed on a lens surface provided in front of the light source is controlled through a lens cut. In this instance, the projection pattern is formed from direct light which is emitted from the light source and directed toward the front of the light source and reflected light which is emitted from the light source, directed toward the reflector, reflected from a reflection surface of the reflector, and then directed toward the front of the light source.

As the second control method, the direct light, which is emitted from the light source and directed toward the front of the light source, is shielded. Therefore, a projection pattern is formed on the lens surface only from the reflected light which is emitted from the light source, directed toward the reflector, reflected from the reflection surface of the reflector, and then directed toward the front of the light source. The thus formed projection pattern is controlled only by means of the reflection surface of the reflector. In this case, the lens provided in front of the light source should be a plain transparent lens which does not contribute to the light distribution control.

In addition to the light distribution control by means of the reflector or the lens as described above, a method for controlling light distribution have been proposed, which employs a liquid crystal panel. In this method, a liquid crystal panel is provided between a light source and a lens provided in front of the light source, and the light emitted from the light source and directed toward the lens is introduced into the liquid crystal panel. The transmittance of the liquid crystal panel is controlled in part to correspondingly control the transmitted amount of the light introduced into the liquid crystal panel, whereby the projection pattern formed on the surface of the lens through the liquid crystal panel is controlled. (See, for example, Japanese Patent Laid-Open Publications No. Hei 7-296605 and No. Hei 11-222073.)

In the above light distribution control method for a vehicle light employing the liquid crystal panel, the liquid crystal panel functions as a variable transmittance shutter or an optical mask. Therefore, the liquid crystal panel controls only the amount of the light guided in the liquid crystal panel but is not involved in the control of the optical path thereof. As a result, the light distribution can be controlled within a limited range of a basic light distribution of the vehicle light formed basically from a light source, a reflector, and a lens.

By the way, a polymer-dispersed liquid crystal is often employed as the liquid crystal employed in such an application. The general characteristics of the polymer-dispersed liquid crystal are that it is transparent when a voltage is applied and is in a clouded and non-transparent state when a voltage is not applied. Therefore, if the application of a voltage to the liquid crystal panel is stopped for some reason while the light is operated, the transmittance of the liquid crystal panel is reduced due to the cloudiness of the liquid crystal. Consequently, the amount of light radiated from the vehicle light is reduced to cause deterioration in visibility, and thus a problem arises in the drivability of a vehicle. A.K. GHOSH et al., J. Appl. Phys., vol. 96, no. 10, pages 5909-5911, 15 November 2004, discloses a polarization-independent electrically tunable phase grating fabricated from ultraviolet-curable liquid crystals. The disclosed UV-curable nematic LCs is a mixture of 75 wt.% of UCL-002-K1 (Dainippon Ink and Chemicals, Inc; dielectric anisotropy Δε = +0.7 at f=1kHz, refractive indices nₑ = 1.664 and nₒ = 1.513 at 20 °C) with a small amount of photoinitiator and 25 wt.% of nematic mixture (ZLI-2293, Merck) with positive dielectric anisotropy. A small quantity of photoinhibitor was added to prevent degradation of stability from polymerization of residual monomers. Twisted cells were prepared from a pair of ITO-coated glass plates with polyimide layer (SE7492, Nissan Chem.). Polyimide layers for the two substrates were rubbed perpendicular to each other (i. e., along the x and y axes for front and back surfaces, respectively). An external ac electric field (10 Vₚₚ/µm, 10 kHz) was applied to a 4 µm thick cell along z axis to reorient the LC molecules to homeotropic. The cell was irradiated at room temperature with a collimated UV light (λ = 365 nm) from a high pressure Hg lanp for about 65 s through a striped patterned photo mask of 20 µm grating period. The UV light power was about 0.8 mW/cm². Irradiated areas were thus polymerized as keeping homeotropic alignment and non-irradiated areas are remained as LC state. Thus, a phase grating consisting of alternating homeotropic (polymerized) and twisted nematic (LCs) stripes was formed. The periodic structure was along the x axis, i. e., parallel to the rubbing direction of the front surface.

### SUMMARY OF THE INVENTION

Accordingly, the present invention has been devised in view of the abovementioned problems. It is an object of the invention to realize a vehicle light employing a liquid crystal optical element and having the features such that a light distribution can be controlled over a wider range beyond the range of a basic light distribution thereof formed mainly from a light source, a reflector, and a lens, without any limitation by the basic light distribution range, and that the basic light distribution formed from the light source, the reflector, and the lens is maintained even when the application of a voltage to a liquid crystal panel is stopped (when no voltage is applied), whereby the function as a vehicle light can be ensured even in such an abnormal state.

According to one aspect of the present invention, a liquid crystal optical element is provided as set forth in claim 1.

According to another aspect of the present invention, a vehicle light is provided as set forth in claim 8.

According to still another aspect of the present invention, a method for manufacturing a liquid crystal optical element is provided as set forth in claim 9.

Preferred embodiments of the present invention may be gathered from the dependent claims.

In the present invention, a hardened part, wich is also called grating part in the following is formed in a liquid crystal layer of a liquid crystal optical element. The grating part is constituted by arranging stripe-like hardened polymer portions maintaining the initial alignment of a liquid crystal and stripe-like non-hardened portions. The grating part is configured such that it is transparent when a voltage is not applied to the liquid crystal optical element whereas it diffuses light due to, when a voltage is applied, the occurrence of a difference in refractive index anisotropy between the hardened portions and the non-hardened portions.

The liquid crystal optical element having such a configuration is placed within an optical path inside a vehicle light constituted by a light source, a reflector, and a lens.

As a result, an improved vehicle light can be realized which employs the liquid crystal optical element and has the following characteristics: When a proper voltage is applied to the liquid crystal optical element, a light distribution can be controlled over a wide range beyond the range of basic light distribution of the vehicle light formed from the light source, the reflector, and the lens. In this configuration, the basic light distribution is maintained even when voltage application to a liquid crystal panel is stopped, whereby the function as a vehicle light can be ensured even in an abnormal state.

### BRIEF DESCRIPTION OF THE DRAWINGS

These and other characteristics, features, and advantages of the disclosed subject matter will become clear from the following description with reference to the accompanying drawings, wherein:
Fig. 1 is a schematic view illustrating an exemplary embodiment of a liquid crystal optical element according the present invention, part of which is cut;
Fig. 2 is a schematic view illustrating the optical path of light guided inside a liquid crystal layer of the liquid crystal optical element according to the present invention;
Fig. 3 is a graph showing the diffusion degree of light in the liquid crystal optical element according to the present invention;
Fig. 4 is a similar graph showing the diffusion degree of light in the liquid crystal optical element according to the present invention;
Fig. 5 is a schematic view illustrating a measurement method for the spread state of light when the liquid crystal optical element according to the present invention is mounted on an optical system;
Fig. 6 is a cross-sectional view illustrating a light on which the liquid crystal optical element according to the present invention is mounted.
Fig. 7 is projections showing the light distribution of a light on which the liquid crystal optical element according to the present invention is mounted.

### DETAILED DESCRIPTION OF PREFERRED EMBODIMENTS

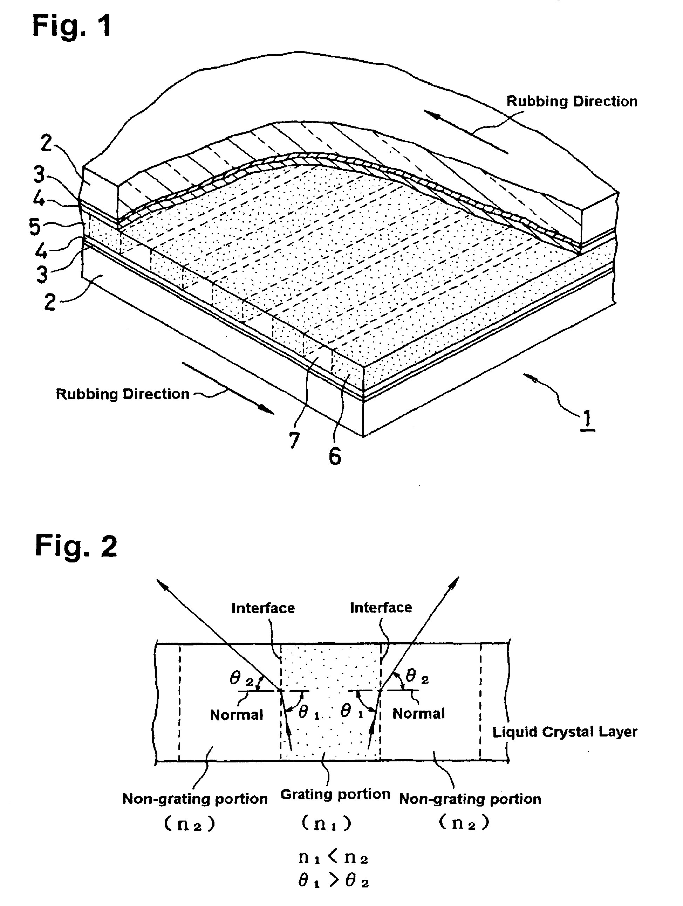

Hereinafter, a preferred exemplary embodiment of the present invention will be described in detail with reference to Figs. 1 to 7 (the same reference numerals refer to the same parts). The exemplary embodiments described hereinafter are preferred specific examples of the present invention, and thus various technically preferable limitations are applied thereto. However, the scope of the present invention is not limited to the exemplary embodiments unless otherwise specifically stated in the following description that the invention is limited thereto.

Fig. 1 is a perspective view illustrating an exemplary embodiment of a liquid crystal optical element according the present invention. The basic configuration of the liquid crystal optical element 1 will be first described. The liquid crystal optical element 1 includes transparent substrates 2 which are made of a glass, a resin, or the like and are disposed opposite and approximately parallel to each other with a predetermined gap. Furthermore, a transparent electrode 3 composed of an ITO film or the like is formed on each of the opposing surfaces of the transparent substrates 2 by means of a vapor deposition method, an ion plating method, a sputtering method, or the like.

Furthermore, an alignment film 4 is formed on the surface of each of the transparent electrodes 3 in order to align liquid crystal molecules in a certain direction. The alignment film 4 is composed of an organic polymer film made of a polyimide-based resin or the like. A sealing material (not shown) is applied to the peripheral portion between the alignment films 4 opposed to each other with a predetermined gap, and a liquid crystal layer 5 is formed by filling a space with a liquid crystal material, the space being surrounded by the sealing material and the alignment films 4 opposed to each other.

Furthermore, the surface of each of the alignment films 4 is subjected to an alignment treatment in order to uniformly distribute the liquid crystal molecules and to align the liquid crystal molecules in a predetermined alignment direction. The alignment treatment is achieved by rubbing the surface of the alignment films in the directions shown by arrows in Fig. 1 by use of natural fiber or synthetic fiber such as rayon to thereby form fine grooves.

The rubbing may not be performed. Specifically, a cell may be produced without rubbing but simply using the original surface state of the alignment films 4 (called as "no rubbing: NR"). That is, the alignment directions of the liquid crystal molecules are random, and the liquid crystal molecules are aligned horizontally to the surface of the alignment films. In this case, since the liquid crystal molecules have characteristics that they are spontaneously aligned to each other, the alignment is not perfectly random, but the adjacent liquid crystal molecules are aligned approximately in parallel. In other words, the liquid crystal molecules form so-called amorphous alignment in which short-range order is present but the alignment directions of the liquid crystal molecules apart from each other are not uniform, i.e., long-range order is absent. If the alignment films have a surface state in which the surface energy thereof is about 40 dyn/cm or more, the liquid crystal molecules are aligned horizontally to the surface of the alignment films.

In the above configuration, the liquid crystal is filled into an antiparallel cell between the alignment films, and the gap (cell gap) between these films is set within the range of 4 to 75 µm. Within the above range for the cell gap, the diffusion characteristics of the liquid crystal layer 5 are optimal at 15 µm. In addition, the response speed is optimal at 4 µm, and the diffusion characteristics are also favorable thereat.

The liquid crystal has characteristics that the dielectric anisotropy Δε is positive (Δε > 0). Therefore, when a potential difference is applied via the transparent electrodes, the liquid crystal molecules are aligned such that the long molecular axis thereof is parallel to the direction of the electric field.

Furthermore, the refractive index anisotropy Δn is approximately 0.25. (The refractive index for ordinary ray n₀ is approximately 1.51, the refractive index for extraordinary ray nₑ is approximately 1.76, and the refractive index anisotropy Δn = nₑ - nₒ ≈ 0.25.)

A photocurable monomer (a monomer exhibiting liquid crystallinity is employed in this exemplary embodiment) is added to the liquid crystal for the liquid crystal layer 5 in the range of 1 to 15 wt.%, and the monomer can be polymerized by irradiating a part of the liquid crystal layer 5 with ultraviolet rays.

No particular limitation is imposed on the photocurable monomer, so long as it is photocurable. In this exemplary embodiment, a UV curable liquid crystal UCL-001 (product of DAINIPPON INK AND CHEMICALS, INCORPORATED) was employed. Experiments were conducted by adding the UV curable liquid crystal UCL-001 to the liquid crystal in an amount of 0.5 to 20 wt.%. As described later, it was found that approximately the same results were obtained when the weight percent of the UV curable liquid crystal was added within the range of 1 to 15 wt.%.

In the preferred embodiment, when a monomer is polymerized by irradiating, with ultraviolet rays, the liquid crystal to which the photocurable monomer is added, a photomask is placed on the external surface of at least one of the glasses holding the liquid crystal layer therebetween. Then, ultraviolet rays are projected toward the liquid crystal layer from the outside of the photomask. Here, examples of the photomask include, but not limited to, a glass mask in which alternating stripes of a transparent portion and a light shielding portion are formed on a glass substrate; and a metal mask in which alternating stripes of a penetrating portion and a non-penetrating portion are formed on a metal plate.

The photomask is composed of the stripes of the ultraviolet ray transparent portion and the stripes of the light shielding portion, and these portions may have the same width. For example, the width of the stripes of the ultraviolet transparent portion and the ultraviolet ray shielding portion is preferably within the range of 10 to 100 µm, and more preferably within the range of 20 to 50 µm. In this exemplary embodiment, the width of the ultraviolet ray transparent portion is 30 µm, and the width of the light shielding portion is also 30 µm. The irradiation time with ultraviolet rays is preferably within the range of 10 to 120 sec, and more preferably within the range of 30 to 120 sec. In this exemplary embodiment, an irradiation time of 60 sec is employed.

In this manner, the liquid crystalline monomer added to the liquid crystal is polymerized to form a polymer in a portion (a grating portion 6) in the liquid crystal layer 5, and the liquid crystalline monomer is not polymerized in a portion (a non-grating portion 7 or called as a "liquid crystal portion" 7) therein. These portions are arranged in alternating stripes as shown in Fig. 1. The relationship between the stripes and the alignment treatment is set such that the extending direction of the line portion of the stripes is approximately orthogonal to the rubbing directions. It should be appreciated that the rubbing directions are not limited to the direction approximately orthogonal to the extending direction of the line portion of the stripes. The rubbing may be performed in directions set within the range of ±45° relative to the direction orthogonal to the extending direction of the line portion of the stripes, and more preferably within the range of ±5°.

A description will next be given of an optical system of the liquid crystal optical element of Fig. 1. When a voltage is not applied to the liquid crystal optical element 1, an interface at which the refractive indices are largely different is absent between the liquid crystal portion 7 and the grating portion 6 which has been polymerized. This is due to the following reasons. The polymerized grating portion 6 has a configuration in which the initial alignment of the liquid crystal is fixed. The refractive index distribution of the liquid crystalline monomer before the polymerization is approximately coincident with that of the liquid crystal. This refractive index distribution is maintained even after the polymerization. Hence, the transmitting light beam is hardly affected. Furthermore, even if the polymer contains the liquid crystal mixed therein during the polymerization, the optical influence thereof is very small since the refractive index distributions are approximately the same.

On the other hand, when a voltage is applied to the liquid crystal optical element 1, no change occurs in the grating portion 6 since the configuration is fixed.

However, the liquid crystal constituting the non-grating portion 7 (liquid crystal portion) changes its alignment direction according to the magnitude of the applied voltage. For a liquid crystal having a positive dielectric anisotropy, the alignment direction is changed such that the long molecular axis is aligned along the electric field. For a liquid crystal having a negative dielectric anisotropy, the alignment direction is changed such that the long molecular axis is orthogonal to the electric field. In this exemplary embodiment, since the dielectric anisotropy is positive, the alignment direction of the liquid crystal is changed so as to align along the direction of the electric field. In addition to this, the refractive index distribution of the liquid crystal is deviated from the refractive index distribution of the grating portion, and thus the interface due to the difference in refractive index is generated between the liquid crystal and the grating portion.

Therefore, in the liquid crystal optical element 1 having the abovementioned configuration, when a voltage is not applied, the light projected onto one of the surfaces of the liquid crystal optical element 1 behaves in the same manner as light transmitting a transparent member. Therefore, the light distribution of the light emitted from the other surface is almost unchanged.

As shown in Fig. 2, when a voltage is applied to the liquid crystal optical element 1, a part of the light projected onto one of the surfaces of the liquid crystal optical element 1 is directed to the interface between the grating portion 6 and the non-grating portion 7. Then, the light directed to the interface travels along an optical path having a refractive index difference at the interface. At this time, the light beam is refracted according to the refractive index change in the optical path. Since both the liquid crystal and the grating portion 6 (that is a cured portion of the liquid crystal with the monomer) are optical mediums having a refractive index anisotropy, the difference in refractive index at the interface is different depending on the incident angle of the light beam. In addition to this, since fine projections and depressions are present on the surface of the grating portion 6 due to polymerization by ultraviolet irradiation, variations are present in the emitting direction of the light beams incident on the interface. Therefore, while the light beams are scattered to some extent, the light beams as a whole travel along a particular direction for each interface.

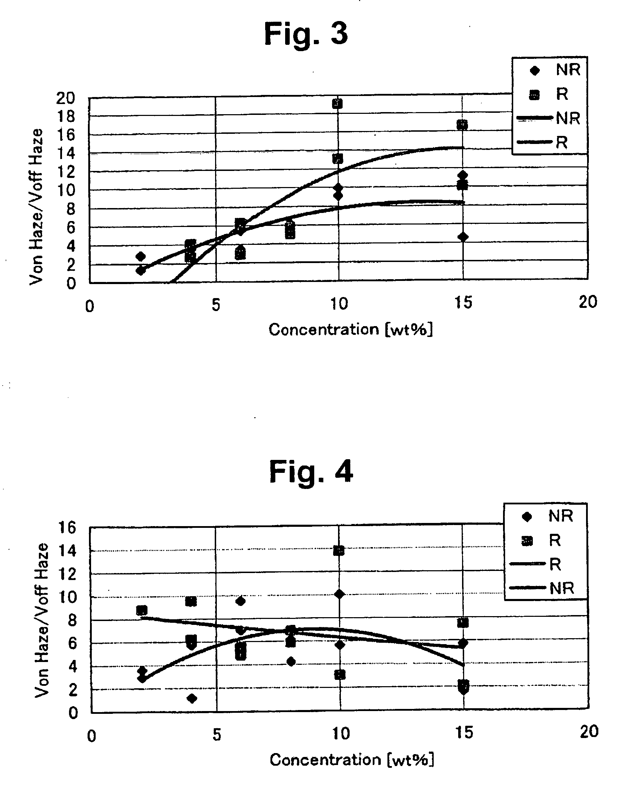

Figs. 3 and 4 are graphs showing the ratio (VonHaze/VoffHaze: diffusion degree) of haze value (VonHaze) when a voltage is applied to the liquid crystal optical element with respect to haze value (VoffHaze) when a voltage is not applied. Figs. 3 and 4 show the ratio
(VonHaze/VoffHaze) for each of a non-rubbing cell (NR) not subjected to the alignment treatment and an antiparallel cell (R) subjected to the alignment treatment. The ratio (VonHaze/VoffHaze) is plotted against the weight percent (wt.%) of the liquid crystalline monomer added to the liquid crystal with respect to the liquid crystal. Fig. 3 shows the measurement results for a liquid crystal optical element having a cell gap (the thickness of the liquid crystal layer) of 4 µm, and Fig. 4 shows the measurement results for a liquid crystal optical element having a cell gap of 15 µm.

The haze value is also referred to as "cloudy value" and is the ratio of an amount of diffused transmission light to a total amount of transmission light when, for example, visible light is projected onto a film. Therefore, the larger the value is, the larger the ratio of the amount of the diffused transmission light with respect to the total amount of the transmission light is. Accordingly, the ratio (VonHaze/VoffHaze) shown in Figs. 3 and 4 represents that the larger the value is, the larger the ratio of the amount of the diffused transmission light when a voltage is applied with respect to that when a voltage is not applied is (diffusion degree).

As can be seen from Fig. 3, when the amount of monomer added to the liquid crystal is 15 wt.% or less, the diffusion degree increases as the amount of the monomer increases for both the non-rubbing cell (NR) not subjected to the alignment treatment and the antiparallel cell (R) subjected to the alignment treatment. As is also clear from the figure, when the added amount of the monomer is approximately 6 wt.% or more, the diffusion degree in the antiparallel cell (R) is larger than that in the non-rubbing cell (NR).

As can be seen from Fig. 4, when the amount of monomer added to the liquid crystal is 15 wt.% or less, the diffusion degree of the non-rubbing cell (NR) exhibits a maximum value at approximately 10 wt.%. On the other hand, the diffusion degree of the antiparallel cell (R) decreases as the weight percent of the monomer increases.

A comparison of the absolute value of the diffusion degree was made between the liquid crystal optical element having a cell gap of 4 µm and that having a cell gap of 15 µm. The comparison reveals that the largest diffusion degree is obtained at approximately 6wt.% or more in the antiparallel cell (R) having a cell gap of 4 µm and subjected to the alignment treatment.

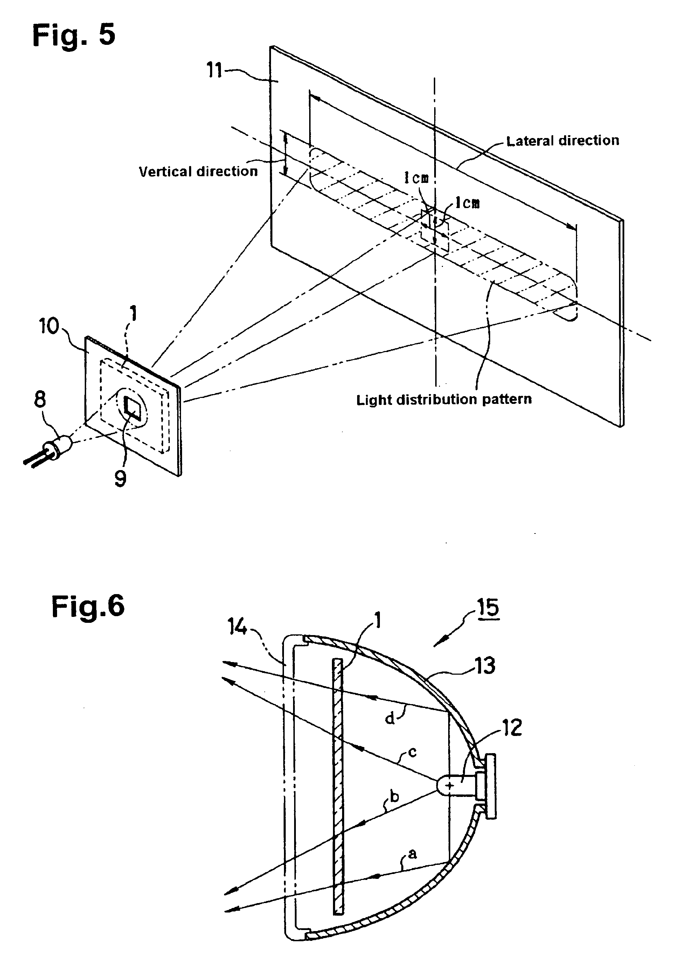

Table 1 shown below is a data sheet including the measurement results for a spread state of the light transmitted through the liquid crystal optical element. The measurements were performed by mounting a prototype liquid crystal optical element on a practical optical system. In the measurement method, an LED was employed as a light source as shown in Fig. 5 since the liquid crystal optical element is assumed to be mounted on an LED light source. Furthermore, a light shielding plate 10 provided with a square light transmission window 9, the liquid crystal optical element 1, and a screen 11 were sequentially placed in front of an LED 8 serving as the light source.

The measurement procedure is as follows. First, the LED 8 was turned on while a voltage was not applied to the liquid crystal optical element 1. The distance between the LED 8 and the liquid crystal optical element 1 and the distance between the liquid crystal optical element 1 and the screen 11 were adjusted relative to each other, and each of these distances was set such that a projection pattern of 1 cm square was projected onto the screen 11.

Next, a predetermined voltage was applied to the liquid crystal optical element 1, and the projection pattern projected onto the screen 11 was measured for the vertical and lateral sizes and the shape.

For each of the non-rubbing cell (NR) not subjected to the alignment treatment and the antiparallel cell (R) subjected to the alignment treatment, three measurement sample cells having cell gaps 4 µm, 15 µm, and 75 µm, respectively, were prepared. For each of these cells, two liquid crystal optical elements into which the liquid crystal was injected were prepared with each of various amounts of the liquid crystalline monomer added to the liquid crystal (2%, 4%, 6%, 8%, 10%, 15%, and 20%, respectively).

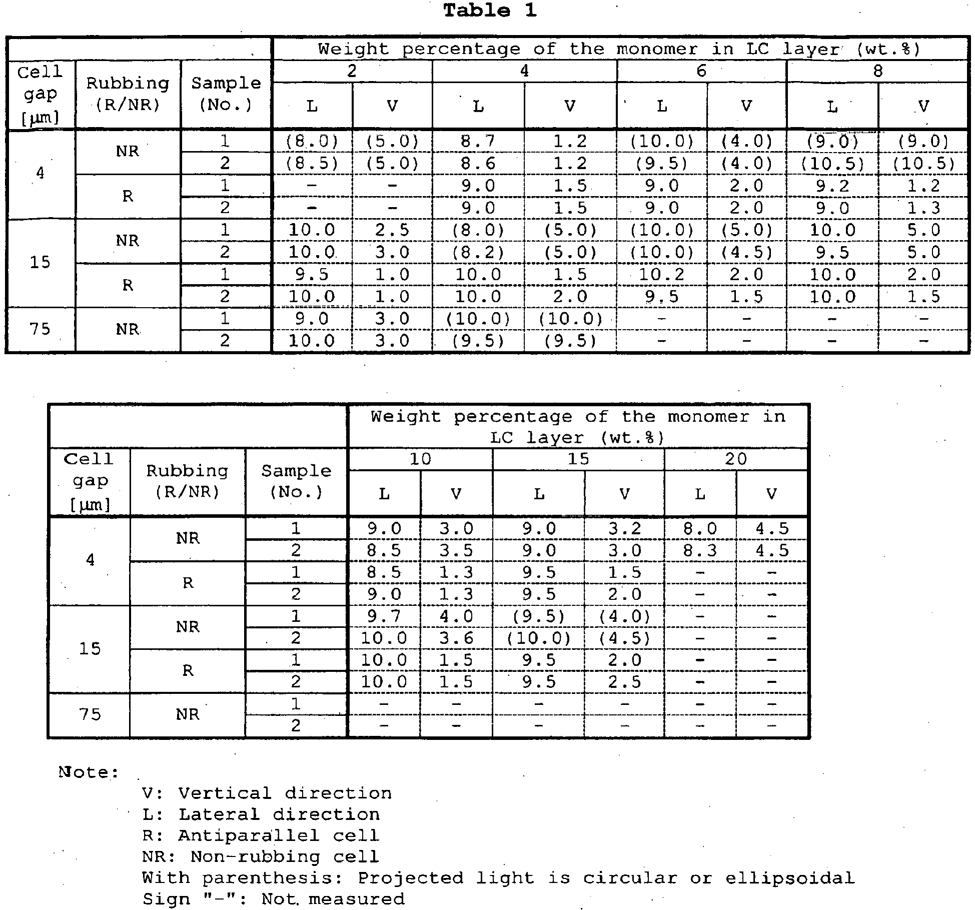

As can be seen from Table 1, in the non-rubbing cell (NR) not subjected to the alignment treatment, the optical anisotropy is small, and the light is scattered also in the vertical direction. Particularly, for the liquid crystal optical elements for which the results are shown in parentheses in the data sheet, the shape of the projection pattern of the projection light was deformed and was circular or ellipsoidal. Furthermore, a comparison was made between the antiparallel cells (R) subjected to the alignment treatment. The comparison shows that the spreading amount of the projection pattern of the projection light in the lateral direction was approximately 10 cm for the liquid crystal cells having a cell gap of 15 µm and was approximately 9 cm for the liquid crystal cells having a cell gap of 4 µm. Furthermore, for each of the cases, the spreading amount of the projection pattern of the projection light in the vertical direction was on the order of one to two times the spreading amount, or 1 cm (the spreading amount when a voltage was not applied to the liquid crystal layer). In particular, in the liquid crystal optical element having a cell gap of 15 µm and containing the monomer in an amount of 2 wt.%, the diffusion degree in the vertical direction was small, and thus the characteristics were excellent in that regard. Note that, for the antiparallel cells (R) subjected to the alignment treatment, the dependency of the optical anisotropy on the weight percentage of the photocurable monomer was generally not so large.

It should be appreciated that the response speed of the liquid crystal optical element having a cell gap of 15 µm was about 90 ms, and the response speed of the liquid crystal optical element having a cell gap of 4 µm was about 30 ms. Furthermore, when the photocurable monomer in an amount of 20 wt.% or more was added to the liquid crystal and was cured, the liquid crystal composition was entirely solidified, and thus the alignment of liquid crystal molecules was not changed even when a voltage was applied.

The liquid crystal optical element having the above characteristics can be employed in a system, for example, shown in Fig. 6. Specifically, in a light 15 having a light source 12, a reflector 13 placed around the light source 12, and a lens 14 placed in front of the light source 12, the liquid crystal optical element 1 is placed between the light source 12 and the lens 14.

In this case, when a voltage is not applied to the liquid crystal optical element 1, the light from the light source 12 transmits through the liquid crystal optical element 1 without being changed and reaches the surface of the lens 14. Therefore, a desired light distribution is obtained through the lens cut of the lens 14. On the other hand, when a voltage is applied to the liquid crystal optical element 1, parts (a to d) of the light emitted from the light source 12 and reaching the liquid crystal optical element 1 are refracted by the liquid crystal optical element 1 in a predetermined direction. The light containing the refracted scattering light forms a projection pattern spread in a predetermined direction and reaches the surface of the lens 14. Then, a light distribution is obtained which is further spread in a predetermined direction through the lens cut of the lens 14.

Specifically, when a voltage is not applied to the liquid crystal optical element 1, the light 15 having the liquid crystal optical element 1 mounted thereon forms a basic distribution pattern formed from the light source 12, the reflector 13, and the lens 14 as in a conventional light. When a voltage is applied to the liquid crystal optical element 1, the light 15 forms a light distribution pattern formed through a combination of the optical anisotropy of the liquid crystal optical element 1 and the light distribution characteristics of a conventional light.

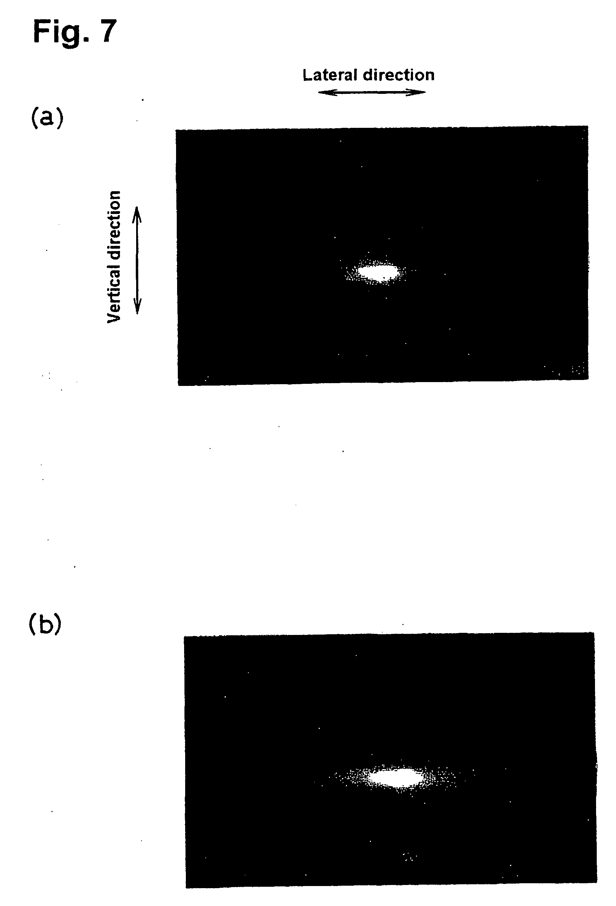

Fig. 7 shows projections when the light distribution of a vehicle light having the liquid crystal optical element mounted thereon is projected onto a screen. (a) shows a light distribution pattern of the vehicle light when a voltage is not applied to the liquid crystal optical element, and (b) shows a light distribution pattern of the vehicle light when a voltage is applied to the liquid crystal optical element.

As obviously shown in the figure, the light distribution pattern when the liquid crystal optical element is operated is clearly spread to a greater extent in the horizontal direction as compared to the light distribution pattern when the liquid crystal optical element is not operated. Furthermore, almost no light distribution pattern spreading was found in the vertical direction irrespective of whether the liquid crystal optical element was operated or not operated. This means that the optical anisotropy of the liquid crystal optical element functions effectively. In addition to this, this proves that the liquid crystal optical element has optical characteristics which can meet the light distribution characteristics requirement for, for example, a vehicle headlight.

As described above, in the liquid crystal optical element of the present invention, the photocurable liquid crystalline monomer is added to the liquid crystal to form the liquid crystal material, and this liquid crystal material is injected into the cell. The liquid crystal cell is then subjected to the alignment treatment to uniformly align the liquid crystal molecules and the liquid crystalline monomer. A part of the liquid crystal cell in this state is irradiated with ultraviolet rays to form the stripe-like hardened portions in which the monomer is polymerized, whereby the stripe-like hardened portions and the stripe-like non-hardened portion are arranged adjacent to one another to serve as a grating part. In this instance, when a voltage is not applied, since the orientation of liquid crystal is the same as that before the ultraviolet irradiation, the liquid crystal optical element is transparent. When a voltage is applied, light is scattered in a predetermined direction by means of the difference in refractive index between the hardened portions irradiated with the ultraviolet rays and the non-hardened portions not irradiated with the ultraviolet rays.

Note that, the liquid crystal optical element of the present invention is not intended for use as a display device. Therefore, a polarizing plate is not necessary, and the cell gap can be set small as compared to a display device. Furthermore, the liquid crystal optical element can be driven at a lower voltage. Therefore, the transmittance of light is excellent, i.e., 95% or more, and a high speed response of the order of 30 ms can be achieved. Furthermore, the liquid crystal optical element can be driven at a low AC voltage of about 2.5 V. Therefore, the liquid crystal optical element has excellent characteristics as an optical element driven electrically.

Next, effects obtained when the liquid crystal optical element having the abovementioned characteristics is employed in a light (particularly, a headlight of a vehicle) will be described.

First, a liquid crystal optical element employed conventionally in a vehicle light has served as a shutter for controlling the transmission and interruption of light. The function of this liquid crystal optical element is thus to control the light distribution within the range of a basic light distribution formed from a light source, a reflector, and a lens, and therefore, the light distribution control beyond the range of the basic light distribution can not be achieved.

On the other hand, in the liquid crystal optical element of the present invention, light is largely scattered in a desired direction by refraction, whereby the light distribution can be controlled over a wider range beyond the range of the basic light distribution. Therefore, when this liquid crystal optical element is mounted on a vehicle light, the projection range in the horizontal direction can be largely expanded with little change in the projection range in the vertical direction. Thus, a lamp can be realized which does not cause glare to a driver of an oncoming vehicle.

Furthermore, the diffusion degree of light can be steplessly controlled corresponding to the voltage applied to the liquid crystal optical element. Therefore, the projection pattern can also be steplessly controlled in accordance with a desired form.

Moreover, since the liquid crystal optical element is not operated as a shutter, the projection light is not shielded, and thus the light can be effectively utilized. Therefore, in order to realize an LED light which has recently been under active development for commercialization but has not been realized due to a lack of the amount of light, the liquid crystal optical element is very effective means as a light distribution control technology constituted by an optical system with low optical loss.

Furthermore, if a voltage is not applied to the liquid crystal optical element for some reasons, the liquid crystal optical element becomes transparent. Therefore, the basic light distribution formed from a light source, a reflector, and a lens can be maintained even in an abnormal state, and the visibility of a driver is not impeded.

Moreover, since the projecting light can be controlled beyond the basic light distribution pattern formed from the light source, the reflector, and the lens, the projection over a wide range can be achieved even when the light has a small light emission surface to the outside. In addition to this, design flexibility can be increased for a vehicle light as well as a vehicle equipped with the light.

In the present exemplary embodiment, parallel orientation is employed, but the present invention is not limited to this orientation form. The liquid crystal optical element has the characteristic that it is transparent when a voltage is not applied, and this characteristic is effective in other orientation forms such as vertical orientation and twisted lateral orientation. In particular, when the vertical orientation is employed, since the total projected area of each of the liquid crystal molecules decreases, the effect of reducing the deterioration of the liquid crystal due to outside light is expected. This is particularly suitable when the liquid crystal optical element is applied to a light employing a discharge lamp which generates a large amount of ultraviolet rays.

## Claims

1. A liquid crystal optical element (1), comprising:
a pair of transparent substrates (2) each having a transparent electrode (3) and an alignment film (4);
a liquid crystal layer (5) held between the transparent substrates (2), the liquid crystal layer (5) including alternating stripes of non-hardened liquid crystal part (7) containing liquid crystal having a dielectric anisotropy and stripes of a hardened part (6) having a predetermined line width and a predetermined aperture width; and
a voltage application unit connected to the transparent electrodes (3), for applying a voltage to the liquid crystal layer (5);
wherein
the hardened part (6) contains a photo-hardened resin material obtained by irradiating a mixed material with light through a photomask when no voltage is applied to the liquid cristal layer, the mixed material containing a photocurable monomer in an amount of 1 to 15 wt.% and the liquid crystal such that in the hardened part the initial alignement of the liquid crystal is fixed and
the hardened part and the liquid crystal part each have a refractive index which is approximately the same when no voltage is apllied, and wherein the refractive index of the liquid crystal is deviated from the refractive index of the hardened part (6) in accordance with a voltage applied to the liquid crystal layer (5), such that a refractive index difference is generated at the interface between the liquid crystal part (7) and the hardened part (6) and light directed to the interface is refracted due to said refractive index difference such that it is largely scattered in a desired direction by said refraction.

2. The liquid crystal optical element (1) according to claim 1, wherein the alignment film (4) has an aligning ability for aligning the liquid crystal approximately parallel to a surface on which the alignment film (4) is formed, and
wherein the liquid crystal has positive dielectric anisotropy.

3. The liquid crystal optical element (1) according to claim 2, wherein
the alignment film (4) is subjected to a surface treatment which provides uniaxial parallel alignment to the liquid crystal, the surface treatment being performed in a direction which makes a predetermined angle relative to the extending direction of the stripes of the hardened parts (6).

4. The liquid crystal optical element (1) according to claim 3, wherein
the direction of the alignment treatment is set within the range of ±45° relative to a direction orthogonal to the extending direction of the stripes of the hardened part (6).

5. The liquid crystal optical element (1) according to claim 3, wherein
the direction of the alignment treatment is set within the range of ±5° relative to a direction orthogonal to the extending direction of the stripes of the hardened part (6).

6. The liquid crystal optical element (1) according to any one of claims 1 to 5, wherein
the stripe width of the hardened part (6) is within the range of 10 to 100 µm, and the aperture width thereof is within the range of 10 to 100 µm.

7. The liquid crystal optical element (1) according to any one of claims 1 to 5, wherein
the stripe width of the hardened part (6) is within the range of 20 to 50 µm, and the aperture width thereof is within the range of 20 to 50 µm.

8. A vehicle light (15), comprising:
a light source (12);
a reflector (13) located behind the light source (12); and
the liquid crystal optical element (1) according to any one of claims 1 to 7, located within an optical path of light which is emitted from the light source (12), wherein
the voltage application unit applies a predetermined voltage to the liquid crystal optical element (1) so as to control a light distribution of the vehicle light (15).

9. A method for manufacturing a liquid crystal optical element (1) as set forth in any of claims 1-7, said method comprising the steps of:
preparing a pair of transparent substrates (2) each having a transparent electrode (3) and an alignment film (4);
injecting a mixed material of a liquid crystal material and a photocurable monomer in between the pair of the transparent substrates (2) ; and
irradiating the mixed material with ultraviolet rays through a photomask while no voltage is applied to form a hardened part (6), wherein the mixed material has a refractive index approximately the same as that of the liquid crystal.

10. The method for manufacturing a liquid crystal optical element (1) according to claim 9, wherein
ultraviolet-rays irradiation time is within the range of 10 to 120 sec.

11. The method for manufacturing a liquid crystal optical element (1) according to claim 9, wherein
ultraviolet-rays irradiation time is within the range of 30 to 120 sec.

## Patentansprüche

1. Ein optisches Flüssigkristallelement (1), das Folgendes aufweist:
ein Paar transparenter Substrate (2), die jeweils eine transparente Elektrode (3) und einen Ausrichtungsfilm (4) haben;
eine Flüssigkristallschicht (5), die zwischen den transparenten Substraten (2) gehalten ist, wobei die Flüssigkristallschicht (5) abwechselnde Streifen eines nicht gehärteten Flüssigkristallteils (7), der einen Flüssigkristall mit einer dielektrischen Anisotropie enthält, und Streifen eines gehärteten Teils (6) beinhaltet, die eine vorbestimmte Streifenbreite und eine vorbestimmte Öffnungsbreite haben; und
eine Spannungsanlegeeinheit, die mit den transparenten Elektroden (3) verbunden ist, zum Anlegen einer Spannung an die Flüssigkristallschicht (5);
wobei
der gehärtete Teil (6) ein photogehärtetes Harzmaterial enthält, das durch Bestrahlen eines gemischten Materials mit Licht durch eine Photomaske, wenn keine Spannung an die Flüssigkristallschicht angelegt ist, erhalten wird,
wobei das gemischte Material ein photohärtbares Monomer in einer Menge von 1 bis 15 Gewichts-% und den Flüssigkristall enthält, so dass in dem gehärteten Teil die anfängliche Ausrichtung des Flüssigkristalls fixiert ist, und der gehärtete Teil und der Flüssigkristallteil jeweils einen Brechungsindex haben, der ungefähr derselbe ist, wenn keine Spannung angelegt wird, und
wobei der Brechungsindex des Flüssigkristalls von dem Brechungsindex des gehärteten Teils (6) entsprechend einer Spannung, die an die Flüssigkristallschicht (5) angelegt ist, abweicht, so dass eine Brechungsindexdifferenz an der Schnittstelle zwischen dem Flüssigkristallteil (7) und dem gehärteten Teil (6) erzeugt wird und Licht, das auf die Schnittstelle gerichtet wird, aufgrund der Brechungsindexdifferenz gebrochen bzw. abgelenkt wird, so dass es durch die Brechung in einer erwünschten Richtung in hohem Maß gestreut wird.

2. Optisches Flüssigkristallelement (1) nach Anspruch 1, wobei der Ausrichtungsfilm (4) eine Ausrichtungsfähigkeit zum Ausrichten des Flüssigkristalls ungefähr parallel zu einer Oberfläche, auf der der Ausrichtungsfilm (4) gebildet ist, hat, und
wobei der Flüssigkristall eine positive, dielektrische Anisotropie hat.

3. Optisches Flüssigkristallelement (1) nach Anspruch 2, wobei
der Ausrichtungsfilm (4) einer Oberflächenbehandlung unterworfen wird, die eine uniaxiale, parallele Ausrichtung für den Flüssigkristall vorsieht, wobei die Oberflächenbehandlung in einer Richtung ausgeführt wird, die einen vorbestimmten Winkel relativ zu der Erstreckungsrichtung der Streifen des gehärteten Teils (6) ergibt.

4. Optisches Flüssigkristallelement (1) nach Anspruch 3, wobei
die Richtung der Ausrichtungsbehandlung innerhalb des Bereichs von ±45° relativ zu einer Richtung senkrecht zu der Erstreckungsrichtung der Streifen des gehärteten Teils (6) eingestellt ist.

5. Optisches Flüssigkristallelement (1) nach Anspruch 3, wobei
die Richtung der Ausrichtungsbehandlung innerhalb des Bereichs von ±5° relativ zu einer Richtung senkrecht zu der Erstreckungsrichtung der Streifen des gehärteten Teils (6) eingestellt ist.

6. Optisches Flüssigkristallelement (1) nach einem der Ansprüche 1 bis 5, wobei
die Streifenbreite des gehärteten Teils (6) innerhalb des Bereichs von 10 bis 100 µm ist und die Öffnungsbreite davon innerhalb des Bereichs von 10 bis 100 µm ist.

7. Optisches Flüssigkristallelement (1) nach einem der Ansprüche 1 bis 5, wobei
die Streifenbreite des gehärteten Teils (6) innerhalb des Bereichs von 20 bis 50 µm ist und die Öffnungsbreite davon innerhalb des Bereichs von 20 bis 50 µm ist.

8. Ein Fahrzeuglicht (15), das Folgendes aufweist:
eine Lichtquelle (12);
einen Reflektor (13), der hinter der Lichtquelle (12) angeordnet ist; und
das optische Flüssigkristallelement (1) nach einem der Ansprüche 1 bis 7, das in einem optischen Pfad des Lichtes angeordnet ist, welches von der Lichtquelle (12) emittiert wird, wobei
die Spannungsanlegeeinheit eine vorbestimmte Spannung an das optische Flüssigkristallelement (1) anlegt, um so eine Lichtverteilung des Fahrzeuglichtes (15) zu steuern.

9. Ein Verfahren zum Herstellen eines optischen Flüssigkristallelementes (1) nach einem der Ansprüche 1-7, wobei das Verfahren die folgenden Schritte aufweist.
Vorbereiten bzw. Anfertigen eines Paares von transparenten Substraten (2), wobei jedes eine transparente Elektrode (3) und einen Ausrichtungsfilm (4) hat;
Injizieren eines gemischten Materials eines Flüssigkristallmaterials und eines photohärtbaren Monomers zwischen das Paar der transparenten Substrate (2); und
Bestrahlen des gemischten Materials mit ultravioletten Strahlen durch eine Photomaske, während keine Spannung angelegt ist, um einen gehärteten Teil (6) zu bilden, wobei das gemischte Material einen Brechungsindex hat, der ungefähr derselbe ist wie der des Flüssigkristalls.

10. Verfahren zum Herstellen eines optischen Flüssigkristallelements (1) nach Anspruch 9, wobei
eine Bestrahlungszeit mit ultravioletten Strahlen innerhalb des Bereichs von 10 bis 120 Sekunden liegt.

11. Verfahren zum Herstellen eines optischen Flüssigkristallelements (1) nach Anspruch 9, wobei
eine Bestrahlungszeit mit ultravioletten Strahlen innerhalb des Bereichs von 30 bis 120 Sekunden liegt.

## Revendications

1. Élément optique à cristaux liquides (1) comprenant
deux substrats transparents (2), chacun comportant une électrode transparente (3) et un film d'alignement (4) ;
une couche de cristaux liquides (5) maintenue entre les substrats transparents (2), la couche de cristaux liquides (5) comprenant des bandes alternées d'une partie de cristaux liquides non durcie (7) contenant des cristaux liquides ayant une anisotropie diélectrique et des bandes d'une partie durcie (6) ayant une largeur de ligne prédéterminée et une largeur d'ouverture prédéterminée ; et
un module d'application de tension connecté aux électrodes transparentes (3), pour appliquer une tension à la couche de cristaux liquides (5) ;
dans lequel la partie durcie (6) contient un matériau de résine photo-durcie obtenu en irradiant sur un matériau mélangé de la lumière à travers un masque photographique lorsqu'aucune tension n'est appliquée à la couche de cristaux liquides, le matériau mélangé contenant un monomère photodurcissable dans une quantité comprise entre 1 et 15 % en poids et les cristaux liquides, de sorte que dans la partie durcie l'alignement initial des cristaux liquides est fixe et la partie durcie et la partie de cristaux liquides ont chacune un indice de réfraction qui est approximativement égal lorsqu'aucune tension n'est appliquée, et dans lequel l'indice de réfraction des cristaux liquides est écarté de l'indice de réfraction de la partie durcie (6) en fonction d'une tension appliquée à la couche de cristaux liquides (5), de sorte qu'une différence d'indice de réfraction est générée à l'interface entre la partie de cristaux liquides (7) et la partie durcie (6) et la lumière dirigée vers l'interface est réfractée en raison de la différence d'indice de réfraction de sorte qu'elle est largement diffusée dans une direction souhaitée par ladite réfraction.

2. Élément optique à cristaux liquides (1) selon la revendication 1, dans lequel le film d'alignement (4) a une capacité d'alignement pour aligner les cristaux liquides approximativement parallèlement à une surface sur laquelle le film d'alignement (4) est formé, et
dans lequel les cristaux liquides ont une anisotropie diélectrique positive.

3. Élément optique à cristaux liquides (1) selon la revendication 2, dans lequel
le film d'alignement (4) est soumis à un traitement de surface qui assure un alignement parallèle uniaxial aux cristaux liquides, le traitement de surface étant réalisé dans une direction qui fait un angle prédéterminé par rapport à la direction dans laquelle s'étendent les bandes de la partie durcie (6).

4. Élément optique à cristaux liquides (1) selon la revendication 3, dans lequel
la direction du traitement d'alignement est réglée dans une plage de ±45° par rapport à une direction orthogonale à la direction dans laquelle s'étendent les bandes de la partie durcie (6).

5. Élément optique à cristaux liquides (1) selon la revendication 3, dans lequel
la direction du traitement d'alignement est réglée dans une plage de ±5° par rapport à une direction orthogonale à la direction dans laquelle s'étendent les bandes de la partie durcie (6).

6. Élément optique à cristaux liquides (1) selon l'une quelconque des revendications 1 à 5, dans lequel
la largeur de bande de la partie durcie (6) est dans la plage de 10 à 100 µm, et sa largeur d'ouverture est dans la plage de 10 à 100 µm.

7. Élément optique à cristaux liquides (1) selon l'une quelconque des revendications 1 à 5, dans lequel
la largeur de bande de la partie durcie (6) est dans la plage de 20 à 50 µm, et sa largeur d'ouverture est dans la plage de 20 à 50 µm.

8. Projecteur de véhicule (15), comprenant :
une source de lumière (12) ;
un réflecteur (13) situé derrière la source de lumière (12) ; et
l'élément optique à cristaux liquides (1) selon l'une quelconque des revendications 1 à 7, situé dans un chemin optique de lumière émise à partir de la source de lumière (12), dans lequel
le module d'application de tension applique une tension prédéterminée à l'élément optique à cristaux liquides (1) de façon à contrôler la distribution de lumière du projecteur de véhicule (15).

9. Procédé pour fabriquer un élément optique à cristaux liquides (1) selon l'une quelconque des revendications 1 à 7, le procédé comprenant les étapes suivantes :
préparer deux substrats transparents (2), chacun comportant une électrode transparente (3) et un film d'alignement (4) ;
injecter un matériau mélangé d'un matériau de cristaux liquides et d'un monomère photodurcissable entre les deux substrats transparents (2) ; et
irradier le matériau mélangé avec des rayons ultraviolets à travers un masque photographique pendant qu'aucune tension n'est appliquée pour former une partie durcie (6), le matériau mélangé ayant un indice de réfraction approximativement égal à celui des cristaux liquides.

10. Procédé pour fabriquer un élément optique à cristaux liquides (1) selon la revendication 9, dans lequel
le temps d'irradiation par des rayons ultraviolets est dans la plage de 10 à 120 secondes.

11. Procédé pour fabriquer un élément optique à cristaux liquides (1) selon la revendication 9, dans lequel
le temps d'irradiation par des rayons ultraviolets est dans la plage de 30 à 120 secondes.
